# EUROPEAN PATENT SPECIFICATION

(11) **EP 4 046 481 B1**
(45) Date of publication and mention of the grant of the patent: **01.04.2026**
(21) Application number: 21386015.8
(22) Date of filing: 23.02.2021
(51) Int. Cl.: A01K 1/015

(54) **PARTICULATE MATERIAL SUITABLE FOR USE AS CAT LITTER**
PARTIKELFÖRMIGES MATERIAL ZUR VERWENDUNG ALS KATZENSTREU
MATÉRIAU PARTICULAIRE APPROPRIÉ POUR UNE UTILISATION EN TANT QUE LITIÈRE POUR CHAT

(43) Date of publication of application: 24.08.2022
(73) Proprietor: IMERTECH SAS, 75015 Paris (FR)
(72) Inventor: Ipsilanti, Eleni, 15238 Halandri (GR); Dedeloudis, Christos, 17561 Paleo Faliro (GR); Margariti, Ourania, 31770 Colomiers (FR); Kapralou, Christina, 19005 Agia Marina, Nea Makri (GR)
(74) Representative: Haseltine Lake Kempner LLP

(56) References cited:
- CN-U- 210 695 429
- US-A1- 2019 289 812

## Description

### TECHNICAL FIELD

The present invention relates generally to a particulate material comprising a core and a coating layer surrounding the core, wherein the core comprises naturally-occurring argillaceous diatomite and the coating layer comprises a mineral, wherein the mineral comprises at least about 70 wt% smectite clay. The present invention further relates to a method of making the particulate material, the use of the particulate material in an animal litter and an animal litter comprising the particulate material.

### BACKGROUND

The animal litter market, for example cat litter market, may be divided into two sections, namely clumping litters and non-clumping litters. Clumping litters are made from materials that clump together when they come into contact with moisture such as urine. This is advantageous because only the clumps need to be removed when cleaning the litter tray, thus reducing the amount of waste. Clumping litters are also generally more absorbent than non-clumping litters. They are also generally made from materials that give them a grey colour, but it is more desirable for the final consumer (the pet owner) to have a white colour for aesthetic reasons. US 2019/289812 A1 describes absorbent granules containing odor controlling compounds that can be used in clumping pet litter. However, clumping litters tend to be made from materials having a high density and are therefore generally much heavier than non-clumping litters, making them more difficult for both the manufacturer and consumer to transport. The need for lightweight litters must be balanced with the spreadability of the litter during handling - very lightweight litters are more easily spread around a room when in use rather than staying in the litter tray.

It is therefore desirable to provide new or improved materials for use in animal litter products, for example clumping litter products that have a relatively low density and/or good moisture absorbency and/or desirable white colour.

### SUMMARY

In accordance with a first aspect of the present invention there is provided a particulate material comprising a core and a coating layer surrounding the core, wherein the core comprises naturally-occurring argillaceous diatomite and the coating layer comprises a mineral, wherein the mineral comprises at least about 70 wt% smectite clay.

In certain embodiments of the first aspect of the present invention the coating layer further comprises a binder.

In accordance with a second aspect of the present invention there is provided an animal litter comprising the particulate material of the first aspect of the present invention, including any embodiment thereof.

In accordance with a third aspect of the present invention there is provided a method for making the particulate material of the first aspect of the present invention, including any embodiment thereof, the method comprising contacting naturally-occurring argillaceous diatomite with a composition comprising a mineral, wherein the mineral comprises at least about 70 wt% smectite clay.

In accordance with a fourth aspect of the present invention there is provided a use of the particulate material of the first aspect of the present invention, including any embodiment thereof, as an animal litter.

In certain embodiments of the second or fourth aspect of the present invention the animal litter is a cat litter.

Certain embodiments of any aspect of the present invention may provide one or more of the following advantages:
- provision of a particulate material that clumps when in contact with moisture;
- provision of a lightweight particulate material;
- provision of a particulate material that has a desirable liquid absorbency;
- provision of a particulate material having a desirable white colour;
- provision of a particulate material having a desirable spreadability;

The details, examples and preferences provided in relation to any particular one or more of the stated aspects of the present invention will be further described herein and apply equally to all aspects of the present invention. Any combination of the embodiments, examples and preferences described herein in all possible variations thereof is encompassed by the present invention unless otherwise indicated herein, or otherwise clearly contradicted by context.

### DETAILED DESCRIPTION

There is provided herein a particulate material comprising a core and a coating layer surrounding the core, wherein the core comprises naturally-occurring argillaceous diatomite and the coating layer comprises a mineral, wherein the mineral comprises at least about 70 wt% smectite clay.

### Core

The core comprises naturally-occurring argillaceous diatomite.

As used herein, the term "naturally-occurring argillaceous diatomite" refers to a material that exists in nature and comprises both diatomite and smectite clay. The term "clayey diatomite" may be used interchangeably with "naturally-occurring argillaceous diatomite". This material is a rock in which the diatomite and smectite clay crystals are naturally formed simultaneously under high pressure. Therefore, particles of the naturally-occurring argillaceous diatomite include grains of both diatomite and smectite adhered together, which cannot be separated. The material thus has different properties (e.g. different smectite and diatomite content, different porosity and/or different density) to naturally-occurring diatomite, naturally-occurring smectite clay and/or artificial mixtures of diatomite and smectite clay. For example, in artificial mixtures of diatomite and smectite clay, the grains of diatomite and smectite can be separated, even if they have been artificially agglomerated together.

Diatomite (also referred to as diatomaceous earth or DE or kieselgur) is a naturally-occurring sedimentary rock enriched in biogenic silica (i.e. silica produced or brought about by living organisms) in the form of siliceous skeletons (frustules) of diatoms. Diatoms are a diverse array of microscopic, single-celled, golden-brown algae, generally of the class Bacillariophyceae, that possess an ornate siliceous skeleton of varied and intricate structures comprising two valves that, in the living diatom, fit together much like a pill box. Diatomite may be obtained from a saltwater source or freshwater source. The typical chemical composition of dry diatomite is in the range of about 60 to 95% silica, 1 to 12% alumina and 0.5 to 8% iron oxide. It may also contain small amounts of other compounds such as calcium oxide, titanium dioxide, magnesium oxide, sodium oxide and potassium oxide. Diatomite has a highly porous structure, for example containing up to 80 to 90% voids, and consists of particles of a wide variety of shapes and sizes.

Smectite clay is a group of phyllosilicate clay minerals which includes, for example, montmorillonite, beidellite, nontronite, saponite and hectorite. These may, for example, be differentiated by variations in chemical composition, for example involving substitutions of Al for Si in tetrahedral cation sites and/or Al, Fe, Mg and Li in octahedral cation sites. Smectite clays have a variable net negative charge, which may be balanced by one or more cations such as sodium, calcium, potassium, magnesium, aluminium and/or hydrogen adsorbed externally of interlamellar surfaces. The specific cations present in the smectite clay may vary depending on where the smectite clay was obtained from. However, smectite clay commonly includes a mixture of cations, for example a mixture of trivalent, bivalent and monovalent cations. The smectite clays may, for example, comprise (e.g. comprise only) a mixture of monovalent and bivalent cations. Smectite clay may, for example, be dioctahedral or trioctahedral.

The naturally-occurring argillaceous diatomite may, for example, comprise at least about 60 wt% diatomite. For example, the naturally-occurring argillaceous diatomite may comprise at least about 62 wt% or at least about 64 wt% or at least about 65 wt% or at least about 66 wt% or at least about 68 wt% or at least about 70 wt% diatomite. The naturally-occurring argillaceous diatomite may, for example, comprise equal to or less than about 80 wt% diatomite. For example, the naturally-occurring argillaceous diatomite may comprise equal to or less than about 78 wt% or equal to or less than about 76 wt% or equal to or less than about 75 wt% or equal to or less than about 74 wt% or equal to or less than about 72 wt% diatomite. For example, the naturally-occurring argillaceous diatomite may comprise from about 60 wt% to about 80 wt% or from about 65 wt% to about 75 wt% diatomite.

The naturally-occurring argillaceous diatomite may, for example, comprise at least about 20 wt% smectite clay. For example, the naturally occurring argillaceous diatomite may comprise at least about 22 wt% or at least about 24 wt% or at least about 25 wt% or at least about 26 wt% or at least about 28 wt% or at least about 30 wt% smectite clay. The naturally-occurring argillaceous diatomite may, for example, comprise equal to or less than about 40 wt% smectite clay. For example, the naturally-occurring argillaceous diatomite may comprise equal to or less than about 38 wt% or equal to or less than about 36 wt% or equal to or less than about 35 wt% or equal to or less than about 34 wt% or equal to or less than about 32 wt% smectite clay. For example, the naturally-occurring argillaceous diatomite may comprise from about 20 wt% to about 40 wt% or from about 25 wt% to about 35 wt% smectite clay.

In certain embodiments, the naturally-occurring argillaceous diatomite is moler (sometimes referred to as "mo-clay"). As used herein, the term "moler" refers to a naturally-occurring argillaceous diatomite that occurs at the western part of the Limfjorden region in northern Denmark, with the most famous outcrops on the northern part of Fur and Mors. Moler may, for example, comprise from about 65 wt% to about 75 wt% diatomite and from about 25 wt% to about 35 wt% smectite clay. For example, the moler may comprise from about 60 wt% to about 70 wt% opal-A from diatom frustules and from about 30 wt% to about 40 wt% clay minerals, for example mainly smectite clay minerals, for example from about 64 wt% to about 68 wt% opal-A from diatom frustules and from about 32 wt% to about 36 wt% of clay minerals, for example mainly smectite clay minerals. For example, the moler may comprise about 66 wt% opal-A from diatom frustules and about 33 wt% clay minerals, mainly smectite clay minerals.

The naturally-occurring argillaceous diatomite may be unprocessed (e.g., not subjected to chemical and/or physical modification processes). The naturally-occurring argillaceous diatomite may, for example, comprise mineral impurities (i.e. minerals other than diatomite and smectite clay). The impurities may, for example be present in an amount less than about 5%, for example less than about 4%, 3%, 2% or 1%, by weight of the naturally-occurring argillaceous diatomite . For example, the impurities may be present in an amount of less than about 0.5% by weight of the naturally-occurring argillaceous diatomite.

The naturally-occurring argillaceous diatomite may undergo processing following mining or extraction. For example, the naturally-occurring argillaceous diatomite may be subjected to at least one physical modification process. The skilled artisan will readily know appropriate physical modification processes, which may be now known or hereafter discovered. Appropriate physical modification processes may include, but are not limited to, grinding, milling, drying, and air classifying. The physical modification process may be used to provide a material with a desired particle size and/or a desired surface area.

### Properties of moler

| **PROPERTY** | **RANGE** |
|---|---|
| Bulk density (g/l) | 450-520 |
| Moisture (%) | 0-4 |
| Absorption capacity, water (Westinghouse w/w) (%) | 70-120 |
| pH (10% aqueous suspension) | 4.5-5.5 |
| Granulometry (mm) | 0-6.5 preferred 0 to 1.5mm |

| Typical chemical analysis (after drying at 110 °C) | |
|---|---|
| SiO2 (%) | 65 - 75 |
| Fe2O3 (%) | 7-9 |
| Al2O3 (%) | 9-11 |
| TiO2 (%) | 1-1.5 |
| CaO (%) | 1-3 |
| K2O + Na2O (%) | 1.5-2.5 |
| MgO (%) | 1-2 |

The naturally-occurring argillaceous diatomite may, for example, be calcined. Calcination is a thermal treatment process in which the naturally-occurring argillaceous diatomite is heated to a temperature of about 650°C-900°C or 700°C-800°C for about 20-40 minutes or about 25 - 35 minutes in the presence of oxygen. During calcination the clay is transformed into Al-Si and Al-Fe-Si forms which develop new chemical bonds among diatoms and thus create agglomerates/clusters through bounding of small diatoms to each other ("secondary or slag bonding").

The naturally-occurring argillaceous diatomite may, for example, have a bulk density equal to or greater than about 400 kg/m³. For example, the naturally-occurring argillaceous diatomite may, for example, have a bulk density equal to or greater than about 425 kg/m³ or equal to or greater than about 450 kg/m³ or equal to or greater than about 475 kg/m³ or equal to or greater than about 500 kg/m³ or equal to or greater than about 525 kg/m³. The naturally-occurring argillaceous diatomite may, for example, have a bulk density equal to or less than about 750 kg/m³. For example, the naturally-occurring argillaceous diatomite may have a bulk density equal to or less than about 725 kg/m³ or equal to or less than about 700 kg/m³ or equal to or less than about 675 kg/m³ or equal to or less than about 650 kg/m³ or equal to or less than about 625 kg/m³ or equal to or less than about 600 kg/m³ or equal to or less than about 575 kg/m³ or equal to or less than about 550 kg/m³. The naturally-occurring argillaceous diatomite may, for example, have a bulk density ranging from about 400 kg/m³ to about 750 kg/m³ or from about 450 kg/m³ to about 650 kg/m³ or from about 500 kg/m³ to about 600 kg/m³.

Bulk density is the mass of a material divided by the volume it occupies. The bulk density of the naturally-occurring argillaceous diatomite refers to the bulk density of the naturally-occurring argillaceous diatomite before it is coated to form a particulate material as described herein.

The bulk density is measured by using a sample splitter, a 0.1g balance and a 250 ml graduated cylinder
1. A representative amount of around 200ml sample is taken
2. The cylinder is placed on the balance and the balance tared
3. The sample is poured into the cylinder
4. The weight and volume of the sample are noted
5. The bulk density is calculated by dividing mass per volume and measured in kg/m3

The naturally-occurring argillaceous diatomite may, for example, have a water absorption equal to or greater than about 80 wt%. For example, the naturally-occurring argillaceous diatomite may have a water-absorption equal to or greater than about 85 wt% or equal to or greater than about 90 wt% or equal to or greater than about 95 wt% or equal to or greater than about 100 wt% or equal to or greater than about 105 wt% or equal to or greater than about 110 wt% or equal to or greater than about 115 wt% or equal to or greater than about 120 wt%. The naturally-occurring argillaceous diatomite may, for example, have a water absorption equal to or less than about 200 wt%. For example, the naturally-occurring argillaceous diatomite may have a water absorption equal to or less than about 190 wt% or equal to or less than about 180 wt% or equal to or less than about 170 wt% or equal to or less than about 160 wt% or equal to or less than about 150 wt% or equal to or less than about 140 wt%. For example, the naturally-occurring argillaceous diatomite may have a water absorption ranging from about 80 wt% to about 200 wt% or from about 100 wt% to about 150 wt% or from about 110 wt% to about 140 wt%.

Water absorption is measured by the Westinghouse method by using an H&B cone with a 325 mesh sieve, a 0.01g balance, a stopwatch and a wide bottom beaker.
1. The cone is wetted, shaken to remove the excess water and weighted
2. 20gr of the tested material are weighted and evenly distributed in the cone.
3. The beaker is filled up with water
4. The cone is merged in the beaker taking care all the sample quantity to be submerged into the water
5. The sample is left under the water for 20 minutes.
6. The cone is taken off the water and let drain for another 20 minutes.
7. The combined weight of the cone and the wetted sample is measured
8. The water absorption is calculated by subtracting the weight of the dry sample and the weight of the wetted cone from the combined weight and divided by the weight of the dry sample.

The naturally-occurring argillaceous diatomite may, for example, have an average particle size equal to or greater than about 0.5 mm. For example, the naturally-occurring argillaceous diatomite may have an average particle size equal to or greater than: about 0.6 or about 0.7 or about 0.8 or about 0.9 or about 1.0 or about 1.1 or about 1.2 or about 1.3 or about 1.4 or about 1.5 mm. The naturally-occurring argillaceous diatomite may, for example, have an average particle size equal to or less than about 3.0 mm. For example, the naturally-occurring argillaceous diatomite may have an average particle size equal to or less than: about 2.9 or about 2.8 or about 2.7 or about 2.6 or about 2.5 mm. For example, the naturally-occurring argillaceous diatomite may have an average particle size ranging from about 0.5 mm to about 3.0mm or from about 1.0 mm to about 3.0 mm or from about 0.6 mm to about 2.9 mm or from about 1.0 mm to about 2.6 mm or from about 1.2 mm to about 2.8 mm or from about 1.5 mm to about 2.5 mm.

Average particle size of the naturally-occurring argillaceous diatomite may, for example, be measured by a vibratory sieve shaker as for example Retsch AS 200 BASIC..

The naturally-occurring argillaceous diatomite is porous. The naturally-occurring argillaceous diatomite may, for example, have an open porosity equal to or greater than about 20 vol%. For example, the naturally-occurring argillaceous diatomite may have an open porosity equal to or greater than about 25 vol% or equal to or greater than about 30 vol%. The naturally-occurring argillaceous diatomite may, for example, have an open porosity equal to or less than about 50 vol%. For example, the naturally-occurring argillaceous diatomite may have an open porosity equal to or less than about 45 vol% or equal to or less than about 40 vol% or equal to or less than about 35 vol%. For example, the naturally-occurring argillaceous diatomite may have an open porosity ranging from about 20 vol% to about 50 vol% or from about 25 vol% to about 40 vol% or from about 30 vol% to about 35 vol%.

Open porosity of the naturally-occurring argillaceous diatomite may, for example, be calculated by the Loose bulk density and its apparent density. The apparent density may be measured by the gas displacement method by using a gas pycnometer as for example the AccuPyc II 1345 by Micromeritics.

One difference between naturally-occurring argillaceous diatomite and diatomite or bentonite or mixtures of diatomite/bentonite may be the number of pores in a particular pore size range. For example, naturally-occurring argillaceous diatomite has a larger number of pores in the macroporosity area (pores with diameters larger than 50 nm) compared to diatomite and bentonite. Diatomite and bentonite have a larger number of pores in the mesoporosity area (pores with diameters between 2 and 50 nm) compared to naturally-occurring argillaceous diatomite.

The naturally-occurring argillaceous diatomite may, for example, comprise about 25 to about 60 or about 25 to about 55 or about 30 to about 50 or about 35 to about 45 vol% of pores in the macroporosity area (pores with diameters larger than 50 nm).

The naturally-occurring argillaceous diatomite may, for example, comprise about 40 to about 75 or about 45 to about 70 or about 50 to about 65 vol% of pores in the mesoporosity area (pores with diameters between 2 and 50 nm).

The naturally-occurring argillaceous diatomite may, for example, comprise less than: about 2 or about 1.5 or about 1 vol% of pores in the microporosity area (pores with diameters smaller than 2 nm).

The vol% of pores in the macro-, meso- and microporosity area may, for example, be measured by nitrogen adsorption (BET) method..Pore size properties (e.g. pore volume and average pore size) are measured using the cylindrical shape assumption (4V/A), which is part of the BJH (Barrett-Joyner-Halenda) model. The BJH model is derived from the same N₂ absorption isotherm that is used for BET surface area calculation (measurement according to the BET method, AFNOR standard X11-621 and 622 or ISO 9277). The BJH model is described in Barrett et al., Am. Chem. Soc., 73 (1951), pages 373 to 380, the contents of which are incorporated herein by reference. A Micromeritics TRISTAR 3000, Micromeritics VACPREP 061, or a Sorptomatic 1990 Fisons instrument may, for example, be used. The samples may, for example, be degassed in an oven overnight at 105°C, followed by 180°C for 30 minutes under nitrogen flow and cooling for 30 minutes under nitrogen flow or at 120°C for 5 hours under nitrogen flow. The isotherm may, for example, be measured for relative pressures P/P₀ ranging from 0.05 to 0.98. Average pore size refers to pore diameter. Pore volume is cumulative and obtained by BJH on the desorption branch for pore sizes between 1.7 and 400 nm.

In certain embodiments, the core consists of or consists essentially of the naturally-occurring argillaceous diatomite. The term "consisting of" excludes any additional component not explicitly recited. The term "consisting essentially of' excludes any additional component not explicitly recited unless the additional component does not materially affect the basic and novel properties of the invention. The total amount of any additional component(s) in the composition may, for example, be limited to up to 10 wt%. For example, the total amount of any additional component(s) in the composition may be limited up to 9 wt% or 8 wt% or 7 wt% or 6 wt% or 5 wt% or 4 wt% or 3 wt% or 2 wt% or 1 wt%.

In certain embodiments, the core further comprises one or more additional materials, for example one or more additional minerals. For example, the core may further comprise particles of silica gel, bentonite, zeolite, attapulgite, palygorkite, sepiolite, expanded perlite, pumice, diatomite, or combinations thereof.

Any additional materials in the core may, for example, be aggregated with the naturally-occurring argillaceous diatomite in order to form a single structure that makes up the core of the particulate materials described herein.

Where the core further comprises one or more additional material, the core may comprise equal to or less than about 20 wt% total additional materials. For example, the core may comprise equal to or less than about 19 wt% or equal to or less than about 18 wt% or equal to or less than about 17 wt% or equal to or less than about 16 wt% or equal to or less than about 15 wt% or equal to or less than about 14 wt% or equal to or less than about 13 wt% or equal to or less than about 12 wt% or equal to or less than about 11 wt% or equal to or less than about 10 wt% total additional materials.

Where the core further comprises one or more additional material, the core may comprise equal to or greater than about 1 wt% total additional materials. For example, the core may comprise equal to or greater than about 2 wt% or equal to or greater than about 3 wt% or equal to or greater than about 4 wt% or equal to or greater than about 5 wt% or equal to or greater than about 6 wt% or equal to or greater than about 7 wt% or equal to or greater than about 8 wt% total additional materials.

For example, the core may comprise from about 1 wt% to about 20 wt% or from about 2 wt% to about 18 wt% or from about 5 wt% to about 15 wt% total additional materials.

The core may, for example, comprise at least about 80 wt% naturally-occurring argillaceous diatomite. For example, the core may comprise at least about 81 wt% or at least about 82 wt% or at least about 83 wt% or at least about 84 wt% or at least about 85 wt% or at least about 86 wt% or at least about 87 wt% or at least about 88 wt% or at least about 89 wt% or at least about 90 wt% naturally-occurring argillaceous diatomite. For example, the core may comprise equal to or less than about 100 wt% naturally-occurring argillaceous diatomite. For example, the core may comprise equal to or less than about 99 wt% or equal to or less than about 98 wt% or equal to or less than about 97 wt% or equal to or less than about 96 wt% or equal to or less than about 95 wt% naturally-occurring argillaceous diatomite. For example, the core may comprise from about 80 wt% to about 100 wt% or from about 85 wt% to about 99 wt% or from about 90 wt% to about 98 wt% naturally-occurring argillaceous diatomite.

The core may, for example, have a bulk density equal to or greater than about 400 kg/m³. For example, the core may, for example, have a bulk density equal to or greater than about 425 kg/m³ or equal to or greater than about 450 kg/m³ or equal to or greater than about 475 kg/m³ or equal to or greater than about 500 kg/m³ or equal to or greater than about 525 kg/m³.

The core may, for example, have a bulk density equal to or less than about 750 kg/m³. For example, the core may have a bulk density equal to or less than about 725 kg/m³ or equal to or less than about 700 kg/m³ or equal to or less than about 675 kg/m³ or equal to or less than about 650 kg/m³ or equal to or less than about 625 kg/m³ or equal to or less than about 600 kg/m³ or equal to or less than about 575 kg/m³ or equal to or less than about 550 kg/m³.

The core may, for example, have a bulk density ranging from about 400 kg/m³ to about 750 kg/m³ or from about 450 kg/m³ to about 650 kg/m³ or from about 500 kg/m³ to about 600 kg/m³.

Bulk density is the mass of a material divided by the volume it occupies; and is measured as described in this description. The bulk density of the core refers to the bulk density of the core before it is coated to form a particulate material as described herein.

The core may, for example, have a water absorption equal to or greater than about 80 wt%. For example, the core may have a water-absorption equal to or greater than about 85 wt% or equal to or greater than about 90 wt% or equal to or greater than about 95 wt% or equal to or greater than about 100 wt% or equal to or greater than about 105 wt% or equal to or greater than about 110 wt% or equal to or greater than about 115 wt% or equal to or greater than about 120 wt%.

The core may, for example, have a water absorption equal to or less than about 200 wt%. For example, the core may have a water absorption equal to or less than about 190 wt% or equal to or less than about 180 wt% or equal to or less than about 170 wt% or equal to or less than about 160 wt% or equal to or less than about 150 wt% or equal to or less than about 140 wt%.

For example, the core may have a water absorption ranging from about 80 wt% to about 200 wt% or from about 100 wt% to about 150 wt% or from about 110 wt% to about 140 wt%.

Water absorption is measured by the method described above in the description.

The core may, for example, have an average particle size equal to or greater than about 0.5 mm. For example, the core may have an average particle size equal to or greater than: about 0.6 or about 0.7 or about 0.8 or about 0.9 or about 1.0 or about 1.1 or about 1.2 or about 1.3 or about 1.4 or about 1.5 mm. The core may, for example, have an average particle size equal to or less than about 3.0 mm. For example, the core may have an average particle size equal to or less than: about 2.9 or about 2.8 or about 2.7 or about 2.6 or about 2.5 mm. For example, the core may have an average particle size ranging from about 0.5 mm to about 3.0mm or from about 1.0 mm to about 3.0 mm or from about 0.6 mm to about 2.9 mm or from about 1.0 mm to about 2.6 mm or from about 1.2 mm to about 2.8 mm or from about 1.5 mm to about 2.5 mm.

Average particle size of the core may, for example, be measured by the method described above in the description.

The core of the particulate materials described herein is porous. The core may, for example, have an open porosity equal to or greater than about 20 vol%. For example, the core may have an open porosity equal to or greater than about 25 vol% or equal to or greater than about 30 vol%. The core may, for example, have an open porosity equal to or less than about 50 vol%. For example, the core may have an open porosity equal to or less than about 45 vol% or equal to or less than about 40 vol% or equal to or less than about 35 vol%. For example, the core may have an open porosity ranging from about 20 vol% to about 50 vol% or from about 25 vol% to about 40 vol% or from about 30 vol% to about 35 vol%.

Open porosity of the core may, for example, be measured by the method described above in the description.

One difference between the core and diatomite or bentonite or mixtures of diatomite/bentonite may be the number of pores in a particular pore size range. For example, the core may have a larger number of pores in the macroporosity area (pores with diameters larger than 50 nm) compared to diatomite and bentonite. Diatomite and bentonite may have a larger number of pores in the mesoporosity area (pores with diameters between 2 and 50 nm) compared to the core.

The core may, for example, comprise about 25 to about 60 or about 25 to about 55 or about 30 to about 50 or about 35 to about 45 vol% of pores in the macroporosity area (pores with diameters larger than 50 nm).

The core may, for example, comprise about 40 to about 75 or about 45 to about 70 or about 50 to about 65 vol% of pores in the mesoporosity area (pores with diameters between 2 and 50 nm).

The core may, for example, comprise less than: about 2 or about 1.5 or about 1 vol% of pores in the microporosity area (pores with diameters smaller than 2 nm).

The % of pores in the macro-, meso- and microporosity area may, for example, be measured by the method described above in the description.

### Coating Layer

The coating layer comprises a mineral, wherein the mineral (also referred to herein as the mineral in the coating layer) comprises, for example, at least about 70 wt% or at least about 75 wt% or at least about 80 wt% or at least about 82 wt% or at least about 84 wt% or at least about 86 wt% or at least about 88 wt% or at least about 90 wt% or at least about 92 wt% or at least about 94 wt% or at least about 96 wt% or at least about 98 wt% smectite clay. Additionally, such mineral may, for example, comprise equal to or less than about 100 wt% or equal to or less than about 99 wt% or equal to or less than about 98 wt% or equal to or less than about 97 wt% or equal to or less than about 96 wt% or equal to or less than about 95 wt% smectite clay. For example, such mineral may comprise from about 80 wt% to about 100 wt% or from about 85 wt% to about 99 wt% or from about 90 wt% to about 98 wt% smectite clay.

The term "coating" used herein is to be understood broadly, and is not limited, for example, to uniform coatings or to coatings which cover the entire surface area of the core. Particulate materials in which discrete regions of the surface of the core are modified with the coating layer will be understood as being coated within the terms of the present description. The coating may suitably be present in an amount sufficient to achieve one or more desirable properties of the particulate material described herein (e.g. to achieve a clumping effect, to achieve a certain white colour, to achieve a certain water absorbency and/or to achieve a certain bulk density).

Smectite clay is a group of phyllosilicate clay minerals which includes, for example, montmorillonite, beidellite, nontronite, saponite and hectorite. These may, for example, be differentiated by variations in chemical composition, for example involving substitutions of Al for Si in tetrahedral cation sites and/or Al, Fe, Mg and Li in octahedral cation sites. Smectite clays have a variable net negative charge, which may be balanced by one or more cations such as sodium, calcium, potassium, magnesium, aluminium and/or hydrogen adsorbed externally of interlamellar surfaces. The specific cations present in the smectite clay may vary depending on where the smectite clay was obtained from. However, smectite clay commonly includes a mixture of cations, for example a mixture of trivalent, bivalent and monovalent cations. The smectite clays may, for example, comprise (e.g. comprise only) a mixture of monovalent and bivalent cations. Smectite clay may, for example, be dioctahedral or trioctahedral.

In particular, the smectite clay in the mineral in the coating layer may, for example, be montmorillonite or hectorite.

The wt% of smectite clay in a mineral may, for example, be measured by Rietveld method, using an X-ray diffractor (e.g. Seifert Analytical X-ray version 2.8, Eigenmann GmbH) and the Rietveld software "Autoquan".

The mineral in the coating layer may, for example, be bentonite.

The bentonite may, for example, be potassium bentonite, sodium bentonite, calcium bentonite, aluminium bentonite, or a combination of one or more thereof. Potassium bentonite, sodium bentonite etc. refer to bentonites wherein the majority of the balancing cations are potassium and sodium respectively. Potassium bentonite and sodium bentonite etc. may therefore also comprise other balancing cations in addition to the respective potassium or sodium cations.

In particular, the mineral in the coating layer may, for example, be sodium bentonite. Sodium bentonite includes naturally occurring sodium bentonite and sodium bentonite formed by replacing cations such as calcium, potassium or aluminium in naturally occurring bentonite with sodium cations, for example by soda ash activation. This may be referred to as sodium-activated bentonite. Soda ash activation may, for example, comprise addition of soda ash powder (sodium carbonate) to bentonite having a moisture content of at least about 20 wt%, for example at least about 22 wt% or at least about 35 wt%, and mixing by, for example, by extrusion or kneading. The bentonite may then be dried and milled to a powder having a desired particle size distribution.

When the mineral in the coating layer is obtained from naturally occurring sources, it may be that some mineral impurities will inevitably contaminate the ground material. In general, however, the mineral will contain less than 5% by weight, preferably less than 1% by weight of other mineral impurities.

The mineral in the coating layer may, for example, comprise equal to or less than about 20 wt% moisture. For example, the mineral may comprise equal to or less than about 18 wt% or equal to or less than about 16 wt% or equal to or less than about 14 wt% or equal to or less than about 12 wt% or equal to or less than about 10 wt% moisture. The mineral may, for example, comprise equal to or greater than about 1 wt% moisture. For example, the mineral may comprise equal to or greater than about 2 wt% or equal to or greater than about 3 wt% or equal to or greater than about 4 wt% or equal to or greater than about 5 wt% moisture. For example, the mineral may comprise from about 1 wt% to about 20 wt% or from about 2 wt% to about 16 wt% or from about 3 wt% to about 10 wt% moisture.

Moisture content may, for example, be measured by heating the mineral until there is no further change in weight and comparing the weight before and after heating.

The mineral in the coating layer may, for example, have a bulk density equal to or greater than about 800 kg/m³. For example, the mineral may, for example, have a bulk density equal to or greater than about 825 kg/m³ or equal to or greater than about 850 kg/m³ or equal to or greater than about 875 kg/m³ or equal to or greater than about 900 kg/m³.

The mineral in the coating layer may, for example, have a bulk density equal to or less than about 1200 kg/m³. For example, the mineral in the coating layer may have a bulk density equal to or less than about 1150 kg/m³ or equal to or less than about 1100 kg/m³ or equal to or less than about 1050 kg/m³ or equal to or less than about 1000 kg/m³.

The mineral in the coating layer may, for example, have a bulk density ranging from about 800 kg/m³ to about 1200 kg/m³ or from about 900 kg/m³ to about 1100 kg/m³ or from about 900 kg/m³ to about 1000 kg/m³.

Bulk density is the mass of a material divided by the volume it occupies. The bulk density of the mineral in the coating layer refers to the bulk density of the mineral before it is used to coat a core material to form a particulate material as described herein.

The mineral in the coating layer may, for example, have a water absorption equal to or greater than about 100 wt%. For example, the mineral may have a water-absorption equal to or greater than about 120 wt% or equal to or greater than about 150 wt% or equal to or greater than about 200 wt% or equal to or greater than about 220 wt% or equal to or greater than about 250 wt%.

The mineral in the coating layer may, for example, have a water absorption equal to or less than about: 1000 or 900 or 800 or 700 or 600 or 500 or 400 wt%. For example, the mineral may have a water absorption equal to or less than about 380 wt% or equal to or less than about 360 wt% or equal to or less than about 340 wt% or equal to or less than about 320 wt% or equal to or less than about 300 wt% or equal to or less than about 280 wt% or equal to or less than about 260 wt% or equal to or less than about 240 wt% or equal to or less than about 220 wt% or equal to or less than about 200 wt%.

For example, the mineral in the coating layer may have a water absorption ranging from about 100 wt% to about 1000 wt% or from about 100 wt% to about 500 wt% or from about 150 wt% to about 400 wt% or from about 120 wt% to about 340 wt% or from about 160 wt% to about 320 wt%.

Water absorption in powders is measured by the modified BASF method by using a 100ml graduated cylinder, a 0.01g balance, a blue ribbon filtering paper, a funnel and a funnel stand.
1. The funnel is placed on the funnel stand, above the graduated cylinder
2. A filter is wetted, weighted and placed in the funnel
3. 10g of tested material are weighed and transferred on the wet filter paper
4. 50ml of water are added to wet all the tested material
5. The time between two consecutive drops dripping from the funnel is measured
6. When this time is more than 2min the test is stopped
7. The filter is removed from the funnel and the combined weight is measured
8. BASF water absorption is calculated by subtracting from the combined weight the weight of the wet filter plus the weight of the dry material and dividing this finding by the weight of the dry material.

The mineral in the coating layer may, for example, have an average particle size equal to or greater than about 10µm or from 10µm to 90µm . The mineral may, for example, have an average particle size equal to or less than about 50µm or from 30 to 60 microns.

Average particle size of the mineral in the coating layer may, for example, be measured by laser light particle size analysis using a CILAS (Compagnie Industrielle des Lasers) 1090 instrument for particles smaller than 500 µm. In this technique, the size of particles in powders, suspensions and emulsions may be measured using the diffraction of a laser beam, based on application of either Fraunhofer or Mie theory. Particles are dispersed in air or water or another solvent stream. The angular variation in intensity of light scattered as a laser beam passes through a dispersed particulate sample. The angular scattering intensity data is then analysed to calculate the size of the particles responsible for creating the scattering pattern. The term "mean particle size" or "d₅₀" used herein is the value, determined in this way, of the particle diameter at which there are 50% by weight of the particles which have a diameter less than the d₅₀ value. The term d₉₀ is the particle size value less than which there are 90% by weight of the particles. The CILAS 1090 instrument normally provides particle size data to two decimal places, to be rounded up or down when determining whether the requirements of the present invention are fulfilled, or by other methods which give essentially the same result. For particles larger than 500 µm, particle size is measured by sieving.

The mineral in the coating layer may, for example, have an L* whiteness ranging from about 70 to about 100 or from about 80 to about 100 or from about 90 to about 100 or from about 70 to about 75 or from about 70 to about 80.

L* whiteness may, for example, be measured using the L*a*b* colour space using the spectrophotometer MINOLTA CM-3700D (illuminant D65/10°) from KONICA/MINOLTA.

The coating layer of the particulate material may, for example, comprise equal to or greater than about 70 wt% of the mineral comprising at least about 70 wt% smectite clay. For example, the coating layer of the particulate material may comprise equal to or greater than about 72 wt% or equal to or greater than about 74 wt% or equal to or greater than about 76 wt% or equal to or greater than about 78 wt% or equal to or greater than about 80 wt% or equal to or greater than about 82 wt% or equal to or greater than about 84 wt% or equal to or greater than about 86 wt% or equal to or greater than about 88 wt% or equal to or greater than about 90 wt% of the mineral comprising at least about 70 wt% smectite clay.

The coating layer of the particulate material may, for example, comprise equal to or less than about 100 wt% of the mineral comprising at least about 70 wt% smectite clay. For example, the coating layer of the particulate material may comprise equal to or less than about 99 wt% or equal to or less than about 98 wt% or equal to or less than about 97 wt% or equal to or less than about 96 wt% or equal to or less than about 95 wt% or equal to or less than about 94 wt% or equal to or less than about 93 wt% or equal to or less than about 92 wt% or equal to or less than about 91 wt% or equal to or less than about 90 wt% of the mineral comprising at least about 70 wt% smectite clay.

For example, the coating layer of the particulate material may comprise from about 70 wt% to about 100 wt% or from about 80 wt% to about 99 wt% or from about 90 wt% to about 98 wt% of the mineral comprising at least about 70 wt% smectite clay.

In certain embodiments, the coating layer consists of or consists essentially of the mineral comprising at least about 70 wt% smectite clay. The term "consisting of" excludes any additional component not explicitly recited. The term "consisting essentially of" excludes any additional component not explicitly recited unless the additional component does not materially affect the basic and novel properties of the invention. The total amount of any additional component(s) may, for example, be limited to 10 wt%. For example, the total amount of any additional component(s) may be limited to 9 wt% or 8 wt% or 7 wt% or 6 wt% or 5 wt% or 4 wt% or 3 wt% or 2 wt% or 1 wt%.

The coating layer may, for example, further comprise a binder. The binder may, for example, be an organic binder, a synthetic binder, or a combination thereof. Examples of organic binders include starch, dextrin, guar gum, xanthan gum, gum Arabic, gum acacia, gum gatti, cellulose gum, sodium carboxy methyl cellulose, polyanionic cellulose, polyacrylamide, sodium polyacrylate, polyethylene oxide, gelatin, chitosan, celluloses, polysaccharides, wheat gluten, soybean protein, and combinations thereof. Examples of synthetic binders include urea-formaldehyde (UF) alone or in combination with ammonium sulfate, melamine urea formaldehyde (MUF), phenol formaldehyde (PF), emulsified methyl diisocyanate (MDI), polyvinyl alcohol, latexes, resins, toluene diisocyanate based polyurethane prepolymer, waterglass, polyethylene powder, polypropylene powder, polyester bi-component fibers, and combinations thereof.

In particular, the binder may be starch.

The coating layer of the particulate material may, for example, comprise equal to or less than about 20 % binder based on the weight of the mineral comprising at least about 70 wt% smectite clay. For example, the coating layer may comprise equal to or less than about 15 % or equal to or less than about 10 % binder based on the weight of the mineral comprising at least about 70 wt% smectite clay.

The coating layer of the particulate material may, for example, comprise equal to or greater than about 0.5 % binder based on the weight of the mineral comprising at least about 70 wt% smectite clay. For example, the coating layer of the particulate material may comprise equal to or greater than about 1 wt% or equal to or greater than about 2 wt% binder based on the weight of the mineral comprising at least about 70 wt% smectite clay.

For example, the coating layer of the particulate material may comprise from about 0.5 % to about 20 % or from about 1 % to about 15 % binder based on the weight of the mineral comprising at least about 70 wt% smectite clay.

The coating layer of the particulate material may, for example, further comprise a reinforcing agent. The reinforcing agent may, for example, be selected from polyvinyl alcohol, casein, natural rubber, natural or synthetic fibers, pectin, ammonium alginate, polyethylene imine, cellulose whiskers, microfibrillated cellulose, epoxy resins, and combinations thereof.

The coating layer of the particulate material may, for example, comprise equal to or less than about 20 % reinforcing agent based on the weight of the mineral comprising at least about 70 wt% smectite clay. For example, the coating layer may comprise equal to or less than about 15 % or equal to or less than about 10 % reinforcing agent based on the weight of the mineral comprising at least about 70 wt% smectite clay.

The coating layer of the particulate material may, for example, comprise equal to or greater than about 0.5 % reinforcing agent based on the weight of the mineral comprising at least about 70 wt% smectite clay. For example, the coating layer of the particulate material may comprise equal to or greater than about 1 wt% or equal to or greater than about 2 wt% reinforcing agent based on the weight of the mineral comprising at least about 70 wt% smectite clay.

For example, the coating layer of the particulate material may comprise from about 0.5 % to about 20 % or from about 1 % to about 15 % reinforcing agent based on the weight of the mineral comprising at least about 70 wt% smectite clay.

### Properties of the Particulate Material

The particulate material may, for example, comprise from about 20 to about 50 or from about 25 to about 45 or from about 30 to about 40 wt% of the core materials.

The particulate material may, for example, comprise from about 80 to about 50 or from about 75 to about 55 or from about 70 to about 60 wt% of the coating layer materials.

The particulate material may, for example, have a bulk density equal to or greater than about 400 kg/m³. For example, the particulate material may have a bulk density equal to or greater than about 425 kg/m³ or equal to or greater than about 450 kg/m³ or equal to or greater than about 475 kg/m³ or equal to or greater than about 500 kg/m³.

The particulate material may, for example, have a bulk density equal to or less than about 750 kg/m³. For example, the particulate material may have a bulk density equal to or less than about 725 kg/m³ or equal to or less than about 700 kg/m³ or equal to or less than about 675 kg/m³ or equal to or less than about 650 kg/m³ or equal to or less than about 625 kg/m³ or equal to or less than about 600 kg/m³.

The particulate material may, for example, have a bulk density ranging from about 400 kg/m³ to about 750 kg/m³ or from about 500 kg/m³ to about 600 kg/m³.

Bulk density is the mass of the particulate material divided by the volume it occupies.

The particulate material may, for example, have a water absorption equal to or greater than about 80 wt%. For example, the particulate material may have a water-absorption equal to or greater than about 90 wt% or equal to or greater than about 100 wt% orf equal to or greater than about 110 wt% or equal to or greater than about 120 wt% or equal to or greater than about 130 wt% or equal to or greater than about 140 wt% or equal to or greater than about 150 wt% or equal to or greater than about 160 wt% or equal to or greater than about 170 wt% or equal to or greater than about 180 wt% or equal to or greater than about 190 wt% or equal to or greater than about 200 wt%.

The particulate material may, for example, have a water absorption equal to or less than about 400 wt%. For example, the particulate material may have a water absorption equal to or less than about 380 wt% or equal to or less than about 360 wt% or equal to or less than about 340 wt% or equal to or less than about 320 wt% or equal to or less than about 300 wt% or equal to or less than about 280 wt% or equal to or less than about 260 wt%.

For example, the particulate material may have a water absorption ranging from about 100 wt% to about 400 wt% or from about 200 wt% to about 300 wt%.

Water absorption is measured by the method described above in the description.

The particulate material may, for example, have an average particle size equal to or greater than: about 0.85 or about 0.9 or about 1 mm.

The particulate material may, for example, have an average particle size equal to or less than: about 2 or about 1.8 or about 1.5 mm.

Average particle size of the particulate material may, for example, be measured by the method described above in the description.

The particulate material may, for example, have an L* whiteness ranging from about 70 to about 90.

L* whiteness may, for example, be measured using the L*a*b* colour space using the spectrophotometer MINOLTA CM-3700D (illuminant D65/10°) from KONICA/MINOLTA.

### Method for Making the Particulate Material

There is further provided herein a method for making a particulate material described herein.

The method may, for example, comprise contacting naturally-occurring argillaceous diatomite with a composition comprising a mineral, wherein the mineral comprises at least about 70 wt% or at least about 75 wt% or at least about 80 wt% or at least about 82 wt% or at least about 84 wt% or at least about 86 wt% or at least about 88 wt% or at least about 90 wt% or at least about 92 wt% or at least about 94 wt% or at least about 96 wt% or at least about 98 wt% smectite clay. Additionally, such mineral may, for example, comprise equal to or less than about 100 wt% or equal to or less than about 99 wt% or equal to or less than about 98 wt% or equal to or less than about 97 wt% or equal to or less than about 96 wt% or equal to or less than about 95 wt% smectite clay. For example, such mineral may comprise from about 80 wt% to about 100 wt% or from about 85 wt% to about 99 wt% or from about 90 wt% to about 98 wt% smectite clay. The composition comprising such mineral may, for example, comprise the mineral and a liquid such as water. The composition comprising such mineral may, for example, comprise the mineral and any binder present in the coating layer. The binder may, for example, be a suspension, for example an aqueous suspension.

After contacting the naturally-occurring argillaceous diatomite with the composition comprising a mineral, wherein the mineral comprises at least about 70 wt% or at least about 75 wt% or at least about 80 wt% or at least about 82 wt% or at least about 84 wt% or at least about 86 wt% or at least about 88 wt% or at least about 90 wt% or at least about 92 wt% or at least about 94 wt% or at least about 96 wt% or at least about 98 wt% smectite clay. Additionally, such mineral may, for example, comprise equal to or less than about 100 wt% or equal to or less than about 99 wt% or equal to or less than about 98 wt% or equal to or less than about 97 wt% or equal to or less than about 96 wt% or equal to or less than about 95 wt% smectite clay. For example, such mineral may comprise from about 80 wt% to about 100 wt% or from about 85 wt% to about 99 wt% or from about 90 wt% to about 98 wt% smectite clay, the material may be dried, for example in an oven or at ambient conditions.

The method may use any known coating technique, for example using a coating pan, a coating disk or an agglomerating disk or pan or wheel. Alternatively, the coating layer may be sprayed on the core, for example as a suspension or in turns with a liquid and with no liquid. The core may, for example, be on a conveyor belt.

The method may, for example, be a continuous or batch method.

### Animal Litter

There is further provided herein the use of the particulate material described herein in or as an animal litter. There is further provided herein an animal litter comprising, consisting of, or consisting essentially of the particulate material described herein. The term "consisting of" excludes any additional component not explicitly recited. The term "consisting essentially of" excludes any additional component not explicitly recited unless the additional component does not materially affect the basic and novel properties of the invention. The total amount of any additional component(s) may, for example, be limited to 10 wt%. For example, the total amount of any additional component(s) may be limited to 9 wt% or 8 wt% or 7 wt% or 6 wt% or 5 wt% or 4 wt% or 3 wt% or 2 wt% or 1 wt%.

The animal litter may, for example, comprise equal to or greater than about 80 wt% of the particulate material described herein. For example, the animal litter may comprise equal to or greater than about 82 wt% or equal to or greater than about 84 wt% or equal to or greater than about 86 wt% or equal to or greater than about 88 wt% or equal to or greater than about 90 wt% of the particulate material described herein.

The animal litter may, for example, comprise equal to or less than about 100 wt% of the particulate material described herein. For example, the animal litter may comprise equal to or less than about 99 wt% or equal to or less than about 98 wt% or equal to or less than about 97 wt% or equal to or less than about 96 wt% or equal to or less than about 95 wt% of the particulate material described herein.

For example, the animal litter may comprise from about 80 wt% to about 100 wt% or from about 90 wt% to about 100 wt% of the particulate material described herein.

The animal litter may, for example, be suitable for use as a litter for any animal. For example, the animal may be a cat.

The animal litter may, for example, have a bulk density equal to or greater than about 400 kg/m³. For example, the animal litter may have a bulk density equal to or greater than about 425 kg/m³ or equal to or greater than about 450 kg/m³ or equal to or greater than about 475 kg/m³ or equal to or greater than about 500 kg/m³.

The animal litter may, for example, have a bulk density equal to or less than about 750 kg/m³. For example, the animal litter may have a bulk density equal to or less than about 725 kg/m³ or equal to or less than about 700 kg/m³ or equal to or less than about 675 kg/m³ or equal to or less than about 650 kg/m³ or equal to or less than about 625 kg/m³ or equal to or less than about 600 kg/m³.

The animal litter may, for example, have a bulk density ranging from about 400 kg/m³ to about 750 kg/m³ or from about 500 kg/m³ to about 600 kg/m³.

Bulk density is the mass of the animal litter divided by the volume it occupies.

The animal litter may, for example, have a water absorption equal to or greater than about 80 wt%. For example, the animal litter may have a water-absorption equal to or greater than about 110 wt% or equal to or greater than about 120 wt% or equal to or greater than about 130 wt% or equal to or greater than about 140 wt% or equal to or greater than about 150 wt% or equal to or greater than about 160 wt% or equal to or greater than about 170 wt% or equal to or greater than about 180 wt% or equal to or greater than about 190 wt% or equal to or greater than about 200 wt%.

The animal litter may, for example, have a water absorption equal to or less than about 400 wt%. For example, the animal litter may have a water absorption equal to or less than about 380 wt% or equal to or less than about 360 wt% or equal to or less than about 340 wt% or equal to or less than about 320 wt% or equal to or less than about 300 wt% or equal to or less than about 280 wt% or equal to or less than about 260 wt%.

For example, the animal litter may have a water absorption ranging from about 100 wt% to about 400 wt% or from about 200 wt% to about 300 wt%.

Water absorption is measured by the method described above in the description.

The animal litter may, for example, have an average particle size equal to or greater than: about 0.85 or about 0.9 or about 1 mm.

The animal litter may, for example, have an average particle size equal to or less than: about 2 or about 1.8 or about 1.5 mm.

Average particle size of the animal litter may, for example, be measured by the method described above in the description.

The animal litter may, for example, have an L* whiteness ranging from about 70 to about 90.

L* whiteness may, for example, be measured using the L*a*b* colour space using the spectrophotometer MINOLTA CM-3700D (illuminant D65/10°) from KONICA/MINOLTA.

### EXAMPLES

### Example 1

1. Calcined moler (150gr) with an average granulometry of 0.85mm was added to a rotating agglomeration wheel (airplane tire).
2. 480gr of white bentonite powder (10-12%>200mesh and moisture content of approximately 10 wt%) were weighted
3. Water (around 3ml) was evenly sprayed on the rotating moler and 3-4 tablespoon (~30 g) of white bentonite was fed in the wheel
4. This continued in 14-16 turns of water and white powder mixture, until moler appeared white.
5. The moler coated with the white mixture was removed from the wheel and left to dry at 105 °C until a moisture of 6-8%.
6. The final coated material was evaluated in terms of appearance, color, bulk density, water absorption (Westinghouse method) and clumping ability, simulating a cat litter usage.

The clumping ability of the cat litter was evaluated using the following methodology:
1. A representative sample of the material was transferred to a 14cm wide crystallising dish in order to form a 5cm layer
2. A 50ml burette was positioned on a support stand 8cm above the surface of the material. This setup is used to disperse 50ml of water to the litter surface forming a clump. The water should be dispersed at once.
3. After a 5min interval remove the crystallising dish was partially inverted and the clump was removed.
4. The clump is weighted and evaluated in regards of its shape, scoopability, cohesion and the presence of leakage in the bottom of the crystallising disc

### Example 2

1. Calcined moler (150gr) with an average granulometry of 1,3 mm was added to a rotating agglomeration wheel (airplane tire).
2. 250gr of white bentonite powder (10-12%>200mesh and moisture content of approximately 10 wt%) were mixed with corn starch in a quantity of 10% by weight of dry bentonite
3. Water (around 3ml) was evenly sprayed on the rotating moler and 3-4 tablespoon (~30 g) of white bentonite was fed in the wheel
4. This continued in 7-9 turns of water and white powder mixture, until moler appeared white.
5. The moler coated with the white mixture was removed from the wheel and left to dry at 105 °C until a moisture of 6-8%.
6. The final coated material was evaluated in terms of appearance, color, bulk density, water absorption (Westinghouse method) and clumping ability, simulating a cat litter usage.

| | EXAMPLE 1 | EXAMPLE 2 | WHITE BENTONITE CAT LITTER | GREY BENTONITE CAT LITTER |
|---|---|---|---|---|
| APPEARANCE | homogeneous coating with some red spots | homogeneous coating with some red spots | White granules | Grey granules |
| WHITENESS (L*) | 74 | 70 | 82 | 60 |
| LBD (kg/m3) | 620 | 590 | 830 | 1020 |
| WATER ABSORPTION (%) | 305 | 214 | 242 | 262 |
| CLUMPING ABILITY | Very good (round shape, cohesive clump, no bottom leakage) | Medium | Good (flat shape, cohesive clump, no bottom leakage) | Very good (round shape, cohesive clump, no bottom leakage) |

The above table demonstrates that good water absorption and clumping ability is observed for the all of samples tested. However, for Examples 1 and 2 prepared in accordance with the present invention, the density of the produced product is much lower. This is advantageous in that the present invention provides an animal litter which is lightweight and therefore much easier to handle.

### Example 3

The following experiments were performed in order to demonstrate the difference between moler (a naturally-occurring argillaceous diatomite) and a synthetic mixture of diatomite and bentonite.

A mixture comprising 30 wt% sodium bentonite powder (12%>75µm) and 70 wt% flux calcined diatomite powder (12% >100mµ) was agglomerated to a size similar to 1-3mm calcined moler in a pelletizing wheel (airplane tire) using water as a binder. The granules were dried at 105°C before evaluation.

For comparison a calcined moler 1-3mm with the following chemical analysis was used:.

| **SiO₂ (%)** | **Al₂O₃ (%)** | **TiO₂ (%)** | **Fe₂O₃ (%)** | **MgO (%)** | **CaO (%)** | **Na₂O (%)** | **K₂O (%)** | **LOI (%)** | **Total** |
|---|---|---|---|---|---|---|---|---|---|
| 70.45 | 10.13 | 1.35 | 8.82 | 1.32 | 3.91 | 0.74 | 1.69 | 1.59 | 100.00 |

Water absorption, density and porosity were determined by the methods described above in the description.

The moler had a bulk density of about 530 kg/m³ whereas the synthetic mixture of diatomite and bentonite had a maximum bulk density of about 350 kg/m³. This is thought to be because the bentonite and diatomite used to make the synthetic mixture had low bulk density and the water used as binder evaporated during drying leaving empty spaces between the particles.

This was further proven by the fact that the open porosity of the moler was about 31 vol% whereas the open porosity of the synthetic mixture of diatomite and bentonite was about 38 vol%.

Approximately 27% of the pores of the moler had a size in the range of 500 to 900 Angstroms (macroporosity area), compared to 4% for the artificial mixture. The diatomite and bentonite used in the synthetic mixture had much smaller pores. The agglomerated synthetic mixture had about 62% of pores in the size range of 36 to 48 Angstroms (low mesoporosity area) compared to 7% for moler.

The water absorption of the moler was about 127 wt%. It was not possible to measure the water absorption of the agglomerated synthetic mixture of diatomite and bentonite because the particles immediately dispersed upon contact with water. The synthetic mixture of diatomite and bentonite in the form of a powder had a water absorption of about 301 wt%.

It is thought that the difference in porosity can help to explain the difference in water absorption since larger pores will be quicker than smaller pores to absorb water.

The foregoing broadly describes certain embodiments of the present invention without limitation. Variations and modifications as will be readily apparent to those skilled in the art are intended to be within the scope of the present invention as defined in and by the appended claims.

The following numbered paragraphs may define particular embodiments of the present invention:
1. A particulate material comprising a core and a coating layer surrounding the core, wherein the core comprises naturally-occurring argillaceous diatomite and the coating layer comprises a mineral, wherein the mineral comprises at least about 70 wt% smectite clay, optionally wherein the mineral comprises at least about 75 wt% or at least about 80 wt% smectite clay.
2. The particulate material of paragraph 1, wherein the coating layer further comprises a binder.
3. The particulate material of paragraphs 1 or 2, wherein the naturally-occurring argillaceous diatomite comprises at least about 60 wt% diatomite and/or at least about 20 wt% smectite clay.
4. The particulate material of any preceding paragraph, wherein the naturally-occurring argillaceous diatomite comprises from about 65 wt% to about 75 wt% diatomite.
5. The particulate material of any preceding paragraph, wherein the naturally-occurring argillaceous diatomite comprises from about 25 wt% to about 35 wt% smectite clay.
6. The particulate material of any preceding paragraph, wherein the naturally-occurring argillaceous diatomite is moler.
7. The particulate material of any preceding paragraph, wherein the naturally-occurring argillaceous diatomite is calcined.
8. The particulate material of any preceding paragraph, wherein the naturally-occurring argillaceous diatomite has a bulk density equal to or greater than about 400 kg/m³ and/or equal to or less than about 750 kg/m³.
9. The particulate material of any preceding paragraph, wherein the naturally-occurring argillaceous diatomite has a water absorption equal to or greater than about 80 wt% and/or equal to or less than about 200 wt%.
10. The particulate material of any preceding paragraph, wherein the naturally-occurring argillaceous diatomite comprises about 25 to about 60 or about 25 to about 55 or about 30 to about 50 or about 35 to about 45 vol% of pores in the macroporosity area.
11. The particulate material of any preceding paragraph, wherein the naturally-occurring argillaceous diatomite comprises about 40 to about 75 or about 45 to about 70 or about 50 to about 65 vol% of pores in the mesoporosity area; and less than: about 2 or about 1.5 or about 1 vol% of pores in the microporosity area .
12. The particulate material of any preceding paragraph, wherein the naturally-occurring argillaceous diatomite has an average particle size equal to or less than about 3.0 mm and/or equal to or greater than about 0.5 mm.
13. The particulate material of any preceding paragraph, wherein the core further comprises particles of silica gel, bentonite, zeolite, attapulgite, palygorkite, sepiolite, expanded perlite, pumice, diatomite, or combinations thereof.
14. The particulate material of any of paragraphs 1 to 12, wherein the core consists of or consists essentially of the argillaceous diatomite.
15. The particulate material of any preceding paragraph, wherein the core has a bulk density equal to or greater than about 400 kg/m³ and/or equal to or less than about 750 kg/m³.
16. The particulate material of any preceding paragraph, wherein the core has a water absorption equal to or greater than about 80 wt% and/or equal to or less than about 200 wt%.
17. The particulate material of any preceding paragraph, wherein the smectite clay in the mineral is montmorillonite or hectorite.
18. The particulate material of any preceding paragraph, wherein the mineral comprising smectite clay is bentonite.
19. The particulate material of paragraph 18, wherein the bentonite is sodium bentonite.
20. The particulate material of any preceding paragraph.
21. The particulate material of any preceding paragraph, wherein the mineral comprising at least about 70 wt% smectite clay has a moisture content equal to or greater than about 1 wt% and/or equal to or less than about 20 wt%.
22. The particulate material of paragraph 2, wherein the binder is an organic binder, for example selected from starch, dextrin, guar gum, xanthan gum, gum Arabic, gum acacia, gum gatti, cellulose gum, sodium carboxy methyl cellulose, polyanionic cellulose, polyacrylamide, sodium polyacrylate, polyethylene oxide, gelatin, chitosan, celluloses, polysaccharides, wheat gluten, soybean protein, and combinations thereof.
23. The particulate material of paragraph 2, wherein the binder is a synthetic binder, for example selected from urea-formaldehyde (UF) alone or in combination with ammonium sulfate, melamine urea formaldehyde (MUF), phenol formaldehyde (PF), emulsified methyl diisocyanate (MDI), polyvinyl alcohol, latexes, resins, toluene diisocyanate based polyurethane prepolymer, waterglass, polyethylene powder, polypropylene powder, polyester bi-component fibers, and combinations thereof.
24. The particulate material of any preceding paragraph, wherein the coating layer further comprises a reinforcing agent, for example selected from polyvinyl alcohol, casein, natural rubber, natural or synthetic fibers, pectin, ammonium alginate, polyethylene imine, cellulose whiskers, microfibrillated cellulose, epoxy resins, and combinations thereof.
25. The particulate material of paragraph 2, wherein the binder is used in an amount ranging from about 0.5 % to about 20 % based on the weight of the mineral comprising at least about 70 wt% smectite clay.
26. The particulate material of any preceding paragraph, wherein the particulate material comprises from about 20 wt% to about 50 wt% of the core and/or from about 80 wt% to about 50 wt% of the coating layer.
27. The particulate material of any preceding paragraph, wherein the particulate material has an L* whiteness ranging from about 70 to about 90.
28. The particulate material of any preceding paragraph, wherein the particulate material has a bulk density equal to or greater than about 400 kg/m³ and/or equal to or less than about 750 kg/m³.
29. The particulate material of any preceding paragraph, wherein the particulate material has a water absorption equal to or greater than about 80 wt% and/or equal to or less than about 400 wt%.
30. The particulate material of any preceding paragraph, wherein the particulate material has an average particle size ranging from about 0.85 to about 2.
31. An animal litter comprising the particulate material of any of paragraphs 1 to 31.
32. The animal litter of paragraph 32, wherein the animal litter has an L* whiteness ranging from about 70 to about 90.
33. The animal litter of paragraph 32 or 33, wherein the animal litter has a bulk density equal to or greater than about 400 kg/m³ and/or equal to or less than about 750 kg/m³.
34. The animal litter of any of paragraphs 32 to 34, wherein the animal litter has a water absorption equal to or greater than about 80 wt% and/or equal to or less than about 400 wt%.
35. The animal litter of any of paragraphs 32 to 35, wherein the animal litter comprises equal to or greater than about 80 wt% of the particulate material of any of paragraphs 1 to 31.
36. A method for making a particulate material of any of paragraphs 1 to 31, the method comprising contacting the naturally-occurring argillaceous diatomite with a composition comprising the mineral, wherein the mineral comprises at least about 70 wt% smectite clay.
37. The method of paragraph 37, further comprising drying the composition comprising the naturally-occurring argillaceous diatomite and the mineral comprising at least about 70 wt% smectite clay.
38. Use of the particulate material of any of paragraphs 1 to 31 as animal litter, for example as cat litter.

## Claims

1. A particulate material comprising a core and a coating layer surrounding the core, wherein the core comprises naturally-occurring argillaceous diatomite and the coating layer comprises a mineral, wherein the mineral comprises at least about 70 wt% smectite clay.

2. The particulate material of claim 1, wherein the mineral comprises at least about 75 wt% or at least about 80 wt% smectite clay.

3. The particulate material of claim 1, wherein the coating layer further comprises a binder.

4. The particulate material of any preceding claim, wherein the naturally-occurring argillaceous diatomite comprises at least about 60 wt% diatomite and/or at least about 20 wt% smectite clay.

5. The particulate material of any preceding claim, wherein the naturally-occurring argillaceous diatomite is moler.

6. The particulate material of any preceding claim, wherein the naturally-occurring argillaceous diatomite is calcined.

7. The particulate material of any preceding claim, wherein the naturally-occurring argillaceous diatomite comprises about 25 to about 60 or about 25 to about 55 or about 30 to about 50 or about 35 to about 45 vol% of pores in the macroporosity area.

8. The particulate material of any preceding claim, wherein the naturally-occurring argillaceous diatomite comprises about 40 to about 75 or about 45 to about 70 or about 50 to about 65 vol% of pores in the mesoporosity area; and less than: about 2 or about 1.5 or about 1 vol% of pores in the microporosity area .

9. The particulate material of any preceding claim, wherein the smectite clay in the mineral is montmorillonite or hectorite.

10. The particulate material of any preceding claim, wherein the mineral comprising smectite clay is bentonite, optionally wherein the bentonite is sodium bentonite.

11. The particulate material of any preceding claim, wherein the particulate material comprises from about 20 wt% to about 50 wt% of the core and/or from about 80 wt% to about 50 wt% of the coating layer.

12. The particulate material of any preceding claim, wherein the particulate material has a bulk density equal to or greater than about 400 kg/m³ and/or equal to or less than about 750 kg/m³.

13. The particulate material of any preceding claim, wherein the particulate material has a water absorption equal to or greater than about 80 wt% and/or equal to or less than about 400 wt%.

14. A method for making a particulate material of any of claims 1 to 13, the method comprising contacting the naturally-occurring argillaceous diatomite with a composition comprising the mineral, wherein the mineral comprises at least about 70 wt% smectite clay.

15. Use of the particulate material of any of claims 1 to 13 as animal litter, for example as cat litter.

## Patentansprüche

1. Partikelförmiges Material, umfassend einen Kern und eine den Kern umgebende Beschichtungsschicht, wobei der Kern natürlich vorkommenden tonigen Diatomit umfasst und die Beschichtungsschicht ein Mineral umfasst, wobei das Mineral mindestens etwa 70 Gew.-% Smektitton umfasst.

2. Partikelförmiges Material nach Anspruch 1, wobei das Mineral mindestens etwa 75 Gew.-% oder mindestens etwa 80 Gew.-% Smektitton umfasst.

3. Partikelförmiges Material nach Anspruch 1, wobei die Beschichtungsschicht ferner ein Bindemittel umfasst.

4. Partikelförmiges Material nach einem der vorhergehenden Ansprüche, wobei der natürlich vorkommende tonige Diatomit mindestens etwa 60 Gew.-% Diatomit und/oder mindestens etwa 20 Gew.-% Smektitton umfasst.

5. Partikelförmiges Material nach einem der vorhergehenden Ansprüche, wobei der natürlich vorkommende tonige Diatomit Moler ist.

6. Partikelförmiges Material nach einem der vorhergehenden Ansprüche, wobei der natürlich vorkommende tonige Diatomit calciniert ist.

7. Partikelförmiges Material nach einem der vorhergehenden Ansprüche, wobei der natürlich vorkommende tonige Diatomit etwa 25 bis etwa 60 oder etwa 25 bis etwa 55 oder etwa 30 bis etwa 50 oder etwa 35 bis etwa 45 Vol.-% Poren in dem Bereich mit Makroporosität umfasst.

8. Partikelförmiges Material nach einem der vorhergehenden Ansprüche, wobei der natürlich vorkommende tonige Diatomit etwa 40 bis etwa 75 oder etwa 45 bis etwa 70 oder etwa 50 bis etwa 65 Vol.-% Poren in dem Bereich mit Mesoporosität umfasst; und weniger als: etwa 2 oder etwa 1,5 oder etwa 1 Vol.-% Poren in dem Bereich mit Mikroporosität.

9. Partikelförmiges Material nach einem der vorhergehenden Ansprüche, wobei der Smektitton in dem Mineral Montmorillonit oder Hectorit ist.

10. Partikelförmiges Material nach einem der vorhergehenden Ansprüche, wobei das Smektitton umfassende Mineral Bentonit ist, wobei das Bentonit gegebenenfalls Natriumbentonit ist.

11. Partikelförmiges Material nach einem der vorhergehenden Ansprüche, wobei das partikelförmige Material von etwa 20 Gew.-% bis etwa 50 Gew.-% des Kerns und/oder von etwa 80 Gew.-% bis etwa 50 Gew.-% der Beschichtungsschicht umfasst.

12. Partikelförmiges Material nach einem der vorhergehenden Ansprüche, wobei das partikelförmige Material eine Schüttdichte von etwa 400 kg/m³ oder mehr und/oder etwa 750 kg/m³ oder weniger aufweist.

13. Partikelförmiges Material nach einem der vorhergehenden Ansprüche, wobei das partikelförmige Material eine Wasserabsorption von etwa 80 Gew.-% oder mehr und/oder etwa 400 Gew.-% oder weniger aufweist.

14. Verfahren zum Herstellen eines partikelförmigen Materials nach einem der Ansprüche 1 bis 13, wobei das Verfahren das Inkontaktbringen des natürlich vorkommenden tonigen Diatomits mit einer das Mineral umfassenden Zusammensetzung umfasst, wobei das Mineral mindestens etwa 70 Gew.-% Smektitton umfasst.

15. Verwendung des partikelförmigen Materials nach einem der Ansprüche 1 bis 13 als Tierstreu, beispielsweise als Katzenstreu.

## Revendications

1. Matériau particulaire comprenant un noyau et une couche de revêtement entourant le noyau, dans lequel le noyau comprend de la diatomite argileuse d'origine naturelle et la couche de revêtement comprend un minéral, dans lequel le minéral comprend au moins environ 70 % en poids d'argile smectite.

2. Matériau particulaire selon la revendication 1, dans lequel le minéral comprend au moins environ 75 % en poids ou au moins environ 80 % en poids d'argile smectite.

3. Matériau particulaire selon la revendication 1, dans lequel la couche de revêtement comprend en outre un liant.

4. Matériau particulaire selon une quelconque revendication précédente, dans lequel la diatomite argileuse d'origine naturelle comprend au moins environ 60 % en poids de diatomite et/ou au moins environ 20 % en poids d'argile smectite.

5. Matériau particulaire selon une quelconque revendication précédente, dans lequel la diatomite argileuse d'origine naturelle est de type moler.

6. Matériau particulaire selon une quelconque revendication précédente, dans lequel la diatomite argileuse d'origine naturelle est calcinée.

7. Matériau particulaire selon une quelconque revendication précédente, dans lequel la diatomite argileuse d'origine naturelle comprend environ 25 à environ 60 ou environ 25 à environ 55 ou environ 30 à environ 50 ou environ 35 à environ 45 % en volume de pores dans la zone de macroporosité.

8. Matériau particulaire selon une quelconque revendication précédente, dans lequel la diatomite argileuse d'origine naturelle comprend environ 40 à environ 75, ou environ 45 à environ 70, ou environ 50 à environ 65 % en volume de pores dans la zone de mésoporosité, et moins d'environ 2, ou d'environ 1,5, ou d'environ 1 % en volume de pores dans la zone de microporosité.

9. Matériau particulaire selon une quelconque revendication précédente, dans lequel l'argile smectite dans le minéral est de la montmorillonite ou de l'hectorite.

10. Matériau particulaire selon une quelconque revendication précédente, dans lequel le minéral comprenant de l'argile smectite est de la bentonite, éventuellement dans lequel la bentonite est de la bentonite sodique.

11. Matériau particulaire selon une quelconque revendication précédente, dans lequel le matériau particulaire comprend environ 20 % en poids à environ 50 % en poids du noyau et/ou environ 80 % en poids à environ 50 % en poids de la couche de revêtement.

12. Matériau particulaire selon une quelconque revendication précédente, dans lequel le matériau particulaire présente une densité apparente égale ou supérieure à environ 400 kg/m³ et/ou égale ou inférieure à environ 750 kg/m³.

13. Matériau particulaire selon une quelconque revendication précédente, dans lequel le matériau particulaire présente une absorption d'eau supérieure ou égale à environ 80 % en poids et/ou inférieure ou égale à environ 400 % en poids.

14. Procédé de fabrication d'un matériau particulaire selon l'une quelconque des revendications 1 à 13, le procédé comprenant la mise en contact de la diatomite argileuse d'origine naturelle avec une composition comprenant le minéral, dans lequel le minéral comprend au moins environ 70 % en poids d'argile smectite.

15. Utilisation du matériau particulaire de l'une quelconque des revendications 1 à 13 comme litière pour animaux, par exemple comme litière pour chats.
